# EUROPEAN PATENT SPECIFICATION

(11) **EP 1 555 400 B1**
(45) Date of publication and mention of the grant of the patent: **22.07.2009**
(21) Application number: 04106706.7
(22) Date of filing: 20.12.2004
(51) Int. Cl.: F01N 7/00, F01N 1/08, F16K 47/02, F01N 1/16, F01N 3/033

(54) **Silencer for pneumatic machines**
Schalldämpfer für pneumatische Maschinen
Silencieux pour des machines pneumatiques

(30) Priority: 14.01.2004 SE 0400058
(43) Date of publication of application: 20.07.2005
(73) Proprietor: SILVENT AB, 504 94 Boras (SE)
(72) Inventor: PERSSON, Ulf Magnus, 506 49, BORAS (SE)
(74) Representative: Johansson, Lars-Erik

(56) References cited:
- GB-A- 1 432 048
- GB-A- 1 471 159
- US-A- 2 792 909
- US-A- 4 971 612
- PATENT ABSTRACTS OF JAPAN vol. 1998, no. 11, 30 September 1998 (1998-09-30) & JP 10 148117 A (KOGANEI CORP), 2 June 1998 (1998-06-02)

## Description

### TECHNICAL FIELD

The present invention relates to a silencer for pneumatic machines and/or plants of the type in which pressurised air is exhausted via a filter.

### BACKGROUND OF THE INVENTION

Machines, tools or plants using pressurised air are employed in a variety of applications. Such equipment can exist for example within engineering industry, steel works, paper mills, saw mills and motor car industry. In many cases the individual machines are combined in a complex control system. It is then often unavoidable that pressurised air must be exhausted at some point. If the pressurised air is allowed to flow freely via small openings in valves, air velocity becomes high. The high air velocity results in noise that it is desirable to muffle. It is common in order to diminish the noise, to use the principle of decreasing the air velocity. In a so called sinter silencer, the air is brought to flow through a porous material of sintered metal or plastics. The lowering of the sound level is achieved by forcing the air to exit via the pores of the porous material. As the exit area via the silencer pores is much larger than the outlet exit area, the air velocity will decrease and thereby also the generation of noise. It is previously known that the air velocity can be dampened by exhausting the pressurised air via a silencer that comprises a porous body. A known silencer is described in an article in the journal "Hydraulics & Pneumatics" of November 2000. The title of the article is "Plastic Silencer Hushes Pneumatic Noise". The silencer of the article comprises a porous body. The silencer can be screwed to the outlet of a valve. It is stated that the exhaust air is let out to the atmosphere by expansion in the porous body. Size and pore structure are said to be optimised to achieve a reduction of the noise level of 20 dB or more. Another silencer for pneumatic systems is described in e.g. US patent no. 4,971,612 that makes use of two filters made of porous material.

One problem with this type of silencer is that the pressurised air exhausted via the porous filter(s) normally contains different contaminants, such as finely powdered particles. When the silencer is used for a long time, such contaminants adhere to the filter, which finally leads to clogging of the filter whereby the silencer can no longer operate in the intended manner. This may lead to work operations taking longer time. In worst case, the silencer may explode. In US 4,971,612 it is suggested that two filters may be employed, whereof one is a primary filter of relatively large pore size, in order for the primary filter not being easily clogged. It is stated that the structure of the silencer is such that it may be washed, if such clogging would occur all the same.

US patent No. 2,792,909 discloses a motor exhaust gas clarifier for internal combustion engines. The device disclosed in that document includes a filter element that consists of a cylindrical housing closed at the top by a cap or cover. An outlet extends through the cover and exhaust gases can thus be carried into the filter element. A drum is rotatably mounted within the housing. It is stated that the walls of the drum are preferably formed of a wire or perforated material. An exhaust gas outlet pipe extends through the cap or cover into a space within the cap and above the drum and it is stated that the exhaust gases are directed downwardly into the top of the drum. A secondary cylinder is also mounted within the shell. A filter bag or pack is positioned within the secondary cylinder and acts to filter out liquid particles in the exhaust gases. It is stated that the walls of the secondary cylinder may be perforated so that gases can pass therethrough.

It is an objective of the present invention to provide an improved silencer for pneumatic equipments. It is a further objective of the invention to provide a silencer that can operate for a long time without maintenance. It is a further objective of the invention to provide a silencer allowing essentially invariable performance during a long period of operation. It is a further objective of the invention to provide a silencer that can be brought to indicate when the silencer is about to be clogged, so that measures can be undertaken before the clogging is complete enough that the operation of the silencer is seriously impaired. It is also an objective of the invention to provide a silencer having an improved safety level.

### ACCOUNT OF THE INVENTION

The objective of the invention is achieved by a silencer that comprises an outer porous filter and an inner porous filter arranged inside the outer porous filter. The filters are air permeable bodies. The silencer according to the invention is arranged such that the relative positions of the filters can be changed so that a portion of the outer filter that initially is covered by the inner filter, becomes exposed. The inner filter is arranged to be moveable inside the outer filter. Furthermore the inner filter is arranged at least partly to abut against the outer filter, the outer filter having an opening through which the inner filter may move in an outwards direction.

Preferably, the inner filter is provided with at least one collar that limits the outwards movement of the inner filter through the opening of the outer filter. Preferably, the inner filter has at least two consecutive collars. Optionally, the inner filter may be of a different colour than the outer filter.

The filters are preferably of circular cylindrical shape. The filters are preferably made of porous polypropylene. A gasket ring may be arranged between the outer and the inner filter.

### BRIEF DESCRIPTION OF THE DRAWINGS

Fig. 1 shows in a side view, a silencer according to the present invention.
Fig. 2 shows the silencer of Fig. 1 in a top view.
Fig. 3 shows how two silencers have been coupled to a valve.
Fig. 4 shows a plurality of silencers coupled to a pneumatic system.
Fig. 5 shows in cross-section, a part of the silencer according to the invention.
Fig. 6 shows in cross-section, the silencer according to the invention where the inner filter is in a first position.
Fig. 6a is a magnification of a detail in Fig. 6.
Fig. 7 shows the silencer according to Fig. 6, with the difference that here the inner filter is in a second position.
Fig. 8 shows the same silencer as Figs. 6 and 7, but the here the inner filter is in a third position.

### DETAILED DESCRIPTION OF THE INVENTION

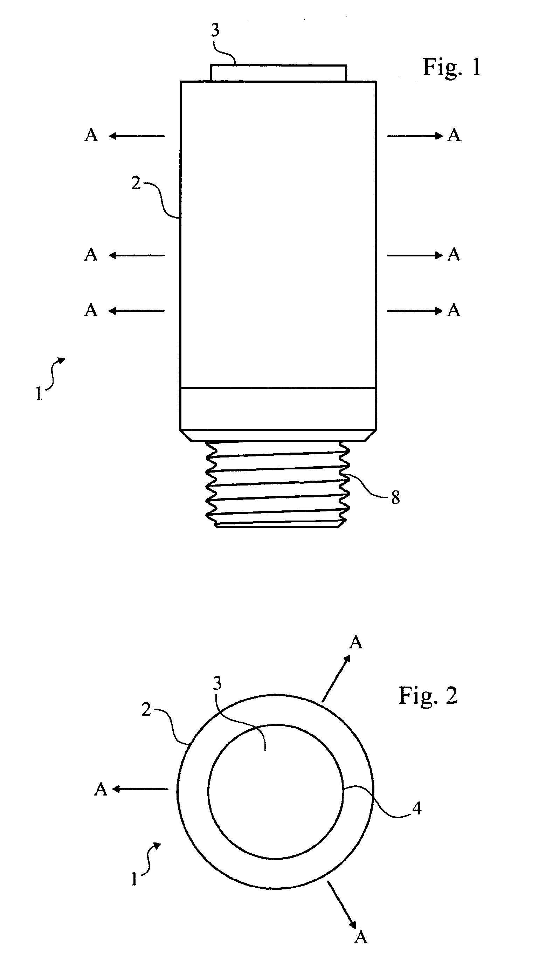

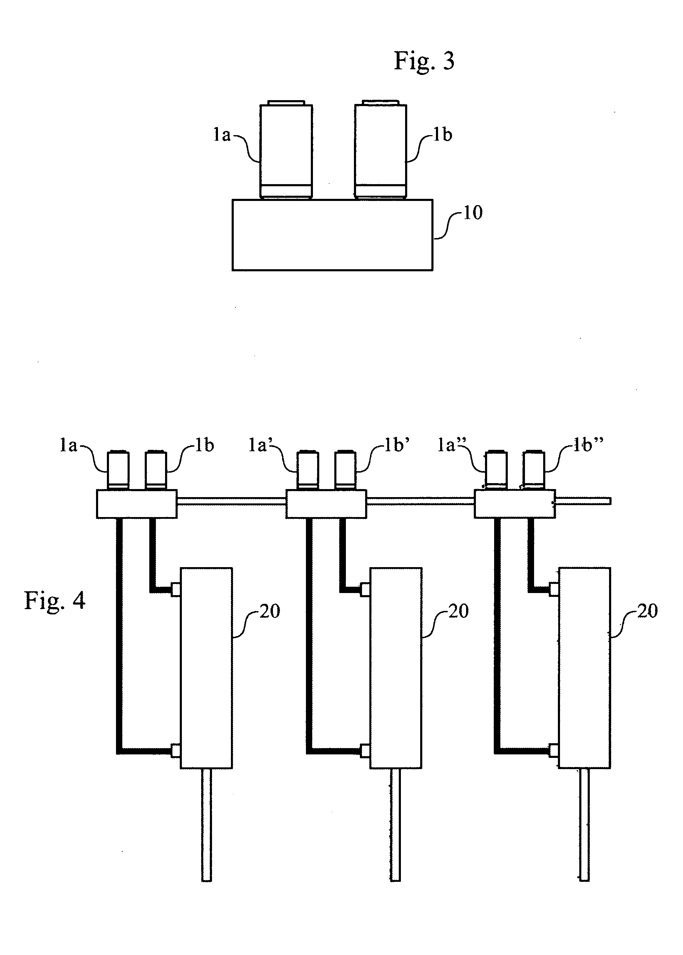

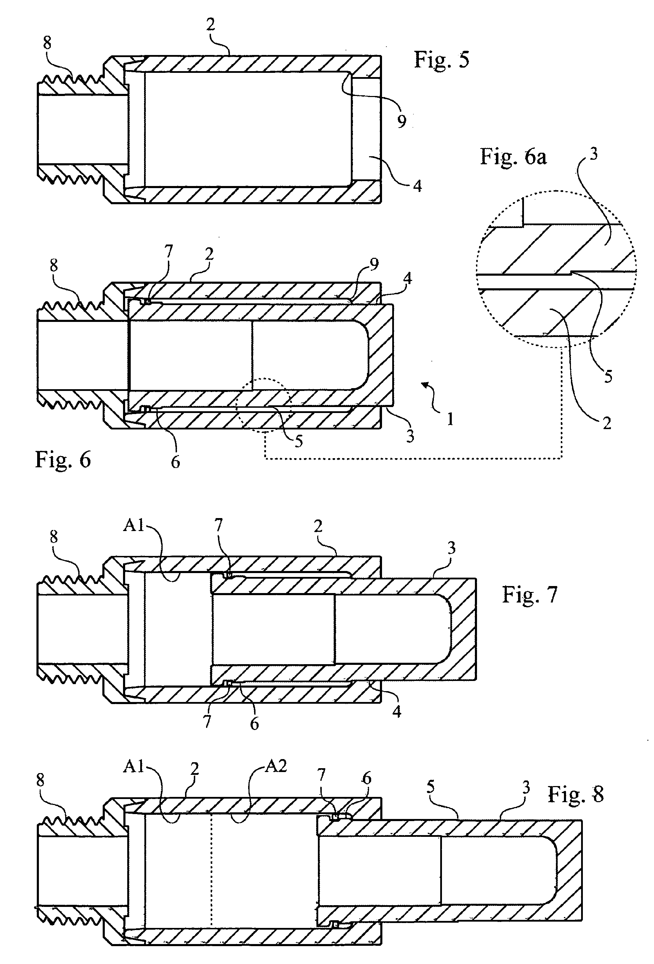

With reference primarily to Figs. 1, 2 and 6, a silencer 1 according to the present invention is shown. The silencer 1 comprises an outer porous filter 2 and an inner porous filter 3 arranged inside the outer filter 2. In conceivable embodiments of the invention, the filters 2, 3 may have a pore size in the range of e.g. 50 µm - 140 µm. In preferred embodiments of the invention, the pores of filters 2, 3 may be of a size in the range of 60 µm - 80 µm. It should be realised however that the invention is not limited to the ranges given above for the pore size. Accordingly, filters 2, 3 may have a pore size smaller than 50 µm or larger than 140 µm. Accordingly, the given ranges are only to be seen as examples of conceivable limits. As shown in Figs. 1 and 6, the silencer 1 may have a rear portion 8 provided with threads, so that the silencer can be screwed to a part 10 having a pressurised air outlet, such as a valve 10 on which the silencer 1 is screwed. Pressurised air that flows into the silencer 1, via the rear portion 8, will enter the cavity 3 of the inner filter, where after it exits through filters 2, 3. The main flowing direction is radially out, which is indicated by arrows A in Figs. 1 and 2. It should be realised however that the inner filter may be of a design that allows an outflow also via the end of filter 3. In principle, other variants are also conceivable. Noise is considerably reduced when the pressurised air exits through the porous filters 2, 3. As is evident from Figs. 3 and 4, it is possible in practice to use a plurality of such silencers 1a, 1b, coupled to a plurality of machines 20 driven by pressurised air. In common applications, the overpressure in a system of such machines 20 may be in the range of 0-2 MPa. In realistic applications, the overpressure may accordingly be 0.5-0.7 MPa e.g. It should be understood however that the given levels of overpressure only are examples of conceivable applications. Accordingly, the invention may also be used in applications in which the overpressure is greater than 2 MPa.

It is now referred to Figures 5-8. The silencer 1 is arranged such that the relative positions of the filters 2, 3 can be changed so that a portion of the outer filter 2 that initially is covered by the inner filter 3, becomes exposed. In preferred embodiments of the invention, the relative positions of the filters 2, 3 can be changed during operation, and preferably be automatically changed when the inner filter 3 suffers from clogging. In Fig. 5, it is shown how the rear portion 8 of the silencer is fixedly connected to the outer filter 2. When the silencer has been connected to a pressurised air outlet by screwing, the outer filter 2 will accordingly have a fixed position. In principle, embodiments may be conceived in which the outer filter 2 is movable and the inner filter 3 is immovable. In a preferred embodiment shown in the enclosed Figs., the inner filter 3 is however movable inside the outer filter 2. As is evident from the Figs., the outer filter 2 can have an opening 4. Then, the inner filter 3 may be arranged at least partly to abut against portions of the outer filter 2 facing inwards. The inner filter 3 can then move in a direction out through the opening 4 of the outer filter 2.

The inner filter 3 abuts against the inner surface of the outer filter 2, and preferably the inner filter 3 has an outer dimension that slightly exceeds an inner dimension of the outer filter 2. Thus, the inner filter 2 can be held in an appropriate position by aid of frictional force between the outer 3 and the inner 2 filters. As is best seen in Fig. 6a, the inner filter 3 may be provided with at least one collar 5 that limits the movement of the inner filter 3, out through the opening 4 of the outer filter 2. As is shown in Fig. 6a, the collar 5 can be seen as a transition to a portion of the inner filter 3 having a larger outer dimension. If the inner filter 3 for example has a circular cylindrical cross-section, the collar 5 can be seen as a transition to a portion of the inner filter 3 that has a larger diameter. Accordingly, Fig. 6a shows how the inner filter 3 has a larger outer dimension to the left of the collar 5 than to the right of the collar 5. It is also conceivable that the inner filter may be provided with a plurality of collars. As is shown in Fig. 6 e.g., the inner filter 3 may have a second collar 6 at a distance from the first collar 5. Just as the first collar 5, the second collar 6 can be seen as a transition from one section of the inner filter 3, having a smaller outer dimension, to a section of the inner filter 3, having a larger outer dimension. Filters 2, 3 may be of circular cylindrical cross-section. Then, the second collar 6 extends further out, in a radial direction, than does the first collar 5. In preferred embodiments, the collars or transitions 5, 6 may be circumferential collars 5, 6 that accordingly run all the way around the inner filter 3. This need however not be the case, but embodiments can also be conceived in which a collar 5, 6, runs only around partly around the circumference of the inner filter 3. It is realised that the inner filter 3 may have more than two consecutive collars 5, 6. Embodiments are for example conceivable having three, four or even more consecutive collars. It should also be understood that embodiments of the invention are conceivable in which the filter has no collar. In such embodiments, it is advantageous if the movement of the inner filter 3 out through the opening 4 of the outer filter 2, is limited in some other way. For example, A stop (not shown) may for example be arranged in connection with the asilencer 1, so that the movement of the inner filter 3 out through the opening 4 of the outer filter 2 is arrested as the front part of the inner filter 3 reaches the stop.

In an advantageous embodiment of the invention, the inner filter 3 may have a different colour than the outer filter 2. Suitably, the filters 2, 3, are circular cylindrical filters 2, 3, but other shapes are in principle also conceivable, such as shapes having a quadratic or elliptic cross-section. Embodiments are in principle also conceivable in which the inner filter 3 has a cross-section of different type than the outer filter 2. In preferred embodiments of the invention, both filters 2, 3 are however of circular cylindrical shape.

The filters 2, 3 are preferably made of porous polypropylene. A gasket ring 7 is suitably arranged between the outer 2 and the inner 3 filters. The gasket ring 7 can be made of nitrile rubber e.g.

In the following, the function of the silencer 1 will be explained with reference to Figs. 6-8. Fig. 6 shows the silencer 1 at an initial stage, before any clogging has taken place. Pressurised air enters via the rear portion 8 of the silencer 1, and flows radially out through filters 2, 3. Eventually, contaminants in the pressurised air will result in a commenced clogging of the inner filter 3. It is realised that it is the inner filter 3 that primarily suffers from clogging. Thereby, the resistance against flow through the silencer 1, and the pressure inside the same, increases. Then, when the pressure is large enough to overcome the friction between filters 2, 3, it will press the inner filter 3 out through opening 4 of the outer filter 2. The inner filter 3 will then move forward until the collar 5 meets an inner edge 9 of the outer filter 2. Thereby, the inner filter 3 is prevented from further movement in the outwards direction. This position is shown in Figure 7. In the Figs., the inner edge 9 is shown at the opening 4 of the outer filter 2. It should be realised however that the inner edge can be positioned further in, in the outer filter 2. Now, the inner filter 3 projects through opening 4 in the outer filter 2. Thereby, a clear indication is given that a certain clogging has taken place, and that there may be a reason for measures such as washing of the inner filter 3 or changing of the silencer 1 for a new and unused silencer. By the inner filter 3 having moved in the outwards direction, an inner area A1 of the outer filter 2 has also been exposed. Previously, this area A1 was covered by the inner filter 3. Now, pressurised air may exit through the exposed portion A1 of the outer filter 2, and the pressure in the silencer can decrease. The initial velocity of the pneumatic system may then be maintained. After some additional time, the exposed portion of the outer filter 2 will also suffer from clogging. Then, the pressure inside the silencer 1 rises again. At least one of the outer 2 and the inner 3 filters is made of a preferably non-rigid material. If the inner filter is made of a non-rigid material, the collar 5 of the inner filter 3 may yield when the pressure in the silencer 1 becomes large enough. Then, the inner filter 3 moves outwards once again through the opening 4 in the outer filter 2, until the second collar 6 meets the edge 9 at the opening 4 of the outer filter. The movement of the inner filter 3 is then arrested. This position is shown in Figure 8. As is shown in Fig. 8, an additional section A2 of the outer filter 2 has now been exposed, which section was previously covered by the inner filter 3. The pressure decreases and the system velocity can be maintained for some extra time. Moreover, the inner filter 3 projects even further through the opening 4 and gives a very clear indication that measures have to be taken, such as changing or cleaning the filters of the silencer, or changing of the entire silencer. This is particularly clear if the inner filter 3 has a different and clear colour. The outer filter 2 may e.g. be of a light colour while the inner filter 3 may be of a dark colour. An operator may then see directly from the silencer that measures have to be taken. It should be realised however that the status of the silencer can be indicated in many different ways. For example, a sensor (not shown) may be connected to the silencer, which sensor senses a relative movement of the two filters 2, 3. As the sensor registers the relative movement of the filters, for example by the inner filter 3 moving outwards through an opening in the outer filter 2, the sensor can signal to a display or a control desk that is monitored by an operator. When the sensor signals the display or control desk, the operator can see this, for example in the form of a symbol or a text message on the display. The operator may then undertake a suitable measure, such as changing the silencer.

In another conceivable embodiment of the invention, the silencer can be connected to a sensor (not shown) that measures the pressure drop over the silencer. When the pressure drop is outside a predetermined range, the sensor can signal to a display or a control desk that is monitored by an operator. The operator may then undertake measures to change the relative positions of the filters 2, 3, so that the pressure drop over the silencer once again gets within the allowable range. This may be done by the operator activating a control device (not shown) that acts on the inner filter 3 or the outer filter 2, in order to change the relative positions of the filters 2, 3. Alternatively, it is conceivable that the operator manually displaces one of the filters in relation to the other. In a variant of this embodiment, the silencer can be provided with a sensor for measuring the pressure drop over the silencer. The sensor is in turn connected to a control device arranged to change the relative positions of the filters 2, 3, as the sensor signals that the pressure drop over the silencer 1 is outside a predetermined range. Then, the control device changes the relative positions of the filters 2, 3 (e.g. by displacing the inner filter 3 out through an opening in the outer filter 2), until the signal from the sensor indicates that the pressure drop over the sensor is once again within the allowable range. Another possibility is that the control device changes the relative positions of the filters 2, 3 as a function of the time that the silencer 1 has been operating or as a function of some other variable.

Accordingly, it is possible to define the invention also in terms of a method of operating the silencer described above. In the method, the relative positions of the filters is changed as is clear from the above description of the function and/or use of the silencer. In a corresponding way, the invention can be defined in terms of a method of operating a plant having machines that operate with pressurised air, and which plant comprises one or more silencers 1 of the type given above. The invention may for example be defined in terms of operation of a plant having machines driven by pressurised air, and silencers according to the invention, in which the relative positions of the filters 2, 3 is monitored and measures are undertaken when the relative positions of the filters 2, 3 change.

It is also possible to define the invention in terms of a system or a plant having machines/tools 20 using pressurised air, which plant comprises one or more units 10 connected to the pressurised air machines 20 and is provided with silencers 1 of the type described above.

For normal applications, the silencer according to the invention is expected to reduce the noise level by about 20-40 dB. It should be understood however that silencers that operate according to the present invention also can have applications outside the given range of 20-40 dB.

By the invention, the risk of a silencer exploding is diminished. By the silencer according to the invention, it is accordingly possible to achieve a higher level of safety. The advantage is also achieved that an essentially invariable air velocity and/or an essentially invariable pressure drop can be maintained in a pneumatic system for an increased time. Accordingly, the performance of the silencer can be maintained invariable or essentially invariable during an increased period of time. If the inner filter is arranged to move outwards when it suffers from clogging, the advantage is achieved that maintenance personnel gets a clear indication that changing or cleaning is necessary.

## Claims

1. A silencer (1) comprising an outer porous filter (2) and an inner porous filter (3) arranged inside the outer filter (2), **characterised in that** the inner filter is arranged to be movable inside the outer filler (2) such that the relative positions of the filters (2, 3) can be changed so that a portion (A1, A2) of the outer filter (2) thereby becomes exposed, which portion was initially covered by the inner filter (3), the inner filter being arranged at least partly to abut against the outer filter (2) and the outer filter (2) having an opening (4) through which the inner filter (3) can move in an outwards direction.

2. A silencer (1) according to claim 1, **characterised in that** the inner filter (3) is provided with at least one collar (5) that limits the movement of the inner filter (3) out through the opening (4) of the outer filter (2).

3. A silencer according to claim 1, **characterised in that** the inner filter (3) is of different colour than the outer filter (2).

4. A silencer according to claim 2, **characterised in that** the inner filter (3) has at least two consecutive collars (5, 6).

5. A silencer according to any one of claims 1-4, **characterised in that** the filters (2, 3) are circular cylindrical filters (2, 3).

6. A silencer according to any one of claims 1-5, **characterised in that** the filters (2, 3) are made of porous polypropylene.

7. A silencer according to claim 1, **characterised in that** a gasket ring (7) is arranged between the outer (2) and the inner (3) filters.

8. A silencer according to claim 1, **characterised in that** the relative positions of the filters (2, 3) can be changed during operation, and preferably be automatically changed when the inner filter (3) suffers from clogging.

## Patentansprüche

1. Schalldämpfer (1), umfassend einen äußeren porösen Filter (2) und einen inneren porösen Filter (3), der innerhalb des äußeren Filters (2) angeordnet ist, **dadurch gekennzeichnet, dass** der innere Filter angeordnet ist, um innerhalb des äußeren Filters (2) beweglich zu sein, so dass die relativen Positionen der Filter (2, 3) geändert werden können, so dass ein Teil (A1, A2) des äußeren Filters (2) **dadurch** freigelegt wird, dieser Teil anfangs durch den inneren Filter (3) abgedeckt ist, wobei der innere Filter mindestens teilweise angeordnet ist, um gegen den äußeren Filter (2) anzuliegen, und wobei der äußere Filter (2) eine Öffnung (4) aufweist, durch welche sich der innere Filter (3) in eine Richtung nach außen bewegen kann.

2. Schalldämpfer (1) gemäß Anspruch 1, **dadurch gekennzeichnet, dass** der innere Filter (3) mit mindestens einem Kragen (5) bereitgestellt wird, der die Bewegung des inneren Filters (3) durch die Öffnung (4) des äußeren Filters (2) begrenzt.

3. Schalldämpfer gemäß Anspruch 1, **dadurch gekennzeichnet, dass** der innere Filter (3) andersfarbig als der äußere Filter (2) ist.

4. Schalldämpfer gemäß Anspruch 2, **dadurch gekennzeichnet, dass** der innere Filter (3) mindestens zwei aufeinanderfolgende Krägen (5, 6) aufweist.

5. Schalldämpfer gemäß einem der Ansprüche 1-4, **dadurch gekennzeichnet, dass** die Filter (2, 3) ringförmige, zylindrische Filter (2, 3) sind.

6. Schalldämpfer gemäß einem der Ansprüche 1-5, **dadurch gekennzeichnet, dass** die Filter (2, 3) aus porösem Polypropylen hergestellt sind.

7. Schalldämpfer gemäß Anspruch 1, **dadurch gekennzeichnet, dass** ein Dichtungsring (7) zwischen dem äußeren (2) und dem inneren (3) Filter angeordnet ist.

8. Schalldämpfer gemäß Anspruch 1, **dadurch gekennzeichnet, dass** die relativen Positionen der Filter (2, 3) während eines Betriebs geändert werden können und vorzugsweise automatisch geändert werden, wenn der innere Filter (3) unter Verstopfung leidet.

## Revendications

1. Silencieux (1) comprenant un filtre poreux externe (2) et un filtre poreux interne (3) aménagé à l'intérieur du filtre externe (2), **caractérisé en ce que** le filtre interne est aménagé pour pouvoir se déplacer à l'intérieur du filtre externe (2) de sorte que les positions relatives des filtres (2, 3) puissent être changées afin qu'une partie (A1, A2) du filtre externe (2) soit ainsi exposée, laquelle partie a initialement été recouverte par le filtre interne (3), le filtre interne étant aménagé au moins en partie pour venir en butée contre le filtre externe (2) et le filtre externe (2) ayant une ouverture (4) à travers laquelle le filtre interne (3) peut se déplacer vers l'extérieur.

2. Silencieux (1) selon la revendication 1, **caractérisé en ce que** le filtre interne (3) est muni d'au moins un collier (5) qui limite le mouvement du filtre interne (3) vers l'extérieur à travers l'ouverture (4) du filtre externe (2).

3. Silencieux selon la revendication 1, **caractérisé en ce que** le filtre interne (3) a une couleur différente de celle du filtre externe (2).

4. Silencieux selon la revendication 2, **caractérisé en ce que** le filtre interne (3) a au moins deux colliers consécutifs (5, 6).

5. Silencieux selon l'une quelconque des revendications 1 à 4, **caractérisé en ce que** les filtres (2, 3) sont des filtres cylindriques circulaires (2, 3).

6. Silencieux selon l'une quelconque des revendications 1 à 5, **caractérisé en ce que** les filtres (2, 3) sont fabriqués en polypropylène poreux.

7. Silencieux selon la revendication 1, **caractérisé en ce qu'**une bague d'étanchéité (7) est aménagée entre les filtres externe (2) et interne (3).

8. Silencieux selon la revendication 1, **caractérisé en ce que** les positions relatives des filtres (2, 3) peuvent être modifiées en cours de fonctionnement et de préférence être automatiquement modifiées lorsque le filtre interne (3) souffre d'une obstruction.
